# EUROPÄISCHE PATENTSCHRIFT

(11) **EP 2 698 227 B1**
(45) Veröffentlichungstag und Bekanntmachung des Hinweises auf die Patenterteilung: **29.07.2015**
(21) Anmeldenummer: 13401087.5
(22) Anmeldetag: 13.08.2013
(51) Int. Cl.: B23Q 39/04

(54) **Bearbeitungsvorrichtung und Verfahren hierzu**
Processing device and method for the same
Dispositif d'usinage et méthode correspondante

(30) Priorität: 15.08.2012 DE 202012103080 U
(43) Veröffentlichungstag der Anmeldung: 19.02.2014
(73) Patentinhaber: Ott, Ralf, 78652 Deißlingen (DE)
(72) Erfinder: Ott, Ralf, 78652 Deißlingen (DE)
(74) Vertreter: Klocke, Peter

(56) Entgegenhaltungen:
- WO-A1-2009/113117
- WO-A2-2009/081443
- JP-A- H04 250 901

## Beschreibung

Die Erfindung betrifft eine Bearbeitungsvorrichtung zum gleichzeitigen Bearbeiten von Werkteilen, insbesondere eine zur spanenden Bearbeitung ausgebildete Bearbeitungsstation gemäß dem Oberbegriff des Anspruchs 1.

Weiterhin betrifft die Erfindung ein Verfahren zum gleichzeitigen Bearbeiten von Werkteilen insbesondere ein zur spanenden Bearbeitung ausgebildetes Verfahren gemäß dem Oberbegriff des Anspruchs 12.

Bearbeitungsvorrichtungen wie Bürstvorrichtung, Bohrvorrichtung oder Schleifeinrichtungen, bei denen ein Rundtakttisch zum Durchlaufen mehrerer Bearbeitungsstationen vorgesehen ist, sind allgemein bekannt. Bei derartigen Bearbeitungsvorrichtungen ist der Rundtakttisch vertikal oder horizontal ausgerichtet. Beispielhaft wird zum Stand der Technik auf die Druckschrift JP H04 250901 A verwiesen.

Die JP H04 250901 A offenbart eine Bearbeitungsvorrichtung zum gleichzeitigen Bearbeiten von Werkstücken, insbesondere eine zur spanenden Bearbeitung ausgebildete Bearbeitungsstation, umfassend eine Halteeinrichtung zum Greifen und/oder Halten der Werkteile während des Bearbeitens, wobei die Halteeinrichtung eine als Vertikalrundtisch ausgebildete Halteeinheit umfasst, wobei der Vertikalrundtisch als Horizontaltrommel ausgebildet ist. Auf der Mantelfläche der Horizontaltrommel sind Werkstückaufnahmen angeordnet. Die Horizontaltrommel ist um ihre Mittelachse takt- und indexierbar. Die Werkstückaufnahmen sind somit um die Drehwelle der Halteinheit rotierbar. Die Bearbeitungsvorrichtung weist zudem zwei Arbeitseinheiten auf, die sich rechts und links der Halteeinheit befinden und jeweils mehrere ober- und unterhalb der Drehwelle der Halteeinheit angeordnete Arbeitsköpfe zur gleichzeitigen Bearbeitung mehrerer der Werkstücke auf zwei einander gegenüberliegenden Seiten ermöglichen.

Es ist eine Aufgabe der vorliegenden Erfindung, eine Bearbeitungsvorrichtung und ein Verfahren zu schaffen, mit welchen eine verbesserte Bearbeitung mehrerer Teile realisierbar ist.

Diese und weitere Aufgaben werden ausgehend von einer Bearbeitungsvorrichtung nach dem Anspruch 1 und einem Verfahren nach dem Anspruch 12 in Verbindung mit deren Merkmalen gelöst. Vorteilhafte Weiterbildungen der Erfindung sind in den abhängigen Ansprüchen angegeben.

Die Erfindung schließt die technische Lehre ein, dass bei einer Bearbeitungsvorrichtung zum gleichzeitigen Bearbeiten von Werkteilen, insbesondere eine zur spanenden Bearbeitung ausgebildete Bearbeitungsstation, umfassend mindestens eine erste Halteeinrichtung zum Greifen und/oder Halten der Werkteile während des Bearbeitens, wobei die Halteeinrichtung mindestens eine als Vertikalrundtakttisch ausgebildete Halteeinheit umfasst, die mindestens zwei voneinander beabstandete und/oder miteinander gekoppelte Haltetische aufweist. Die Bearbeitungsvorrichtung ist zum gleichzeitigen Bearbeiten von mindestens zwei Werkteilen ausgebildet. Bevorzugt ist die Bearbeitungsvorrichtung zum gleichzeitigen Bearbeiten von mindestens zwei Werkstücken an verschiedenen Stellen und/oder mit verschiedenen Werkzeugen ausgebildet. Hierzu werden die mindestens zwei Werkstücke oder Werkteile mittels einer entsprechenden Aufnahme aufgenommen. Die Aufnahmen sind an der jeweiligen Halteeinrichtung angebracht. Über eine Bewegung der entsprechenden Halteeinrichtung wird das Werkstück oder Werkteil von einer Position, beispielsweise einer Bearbeitungsposition, in eine weitere Position, beispielsweise eine weitere Bearbeitungsposition oder eine Übergabeposition gebracht. Die Halteeinrichtung weist dabei eine entsprechende Halteeinheit auf, die als Rundtakttisch, bevorzugt als Vertikalrundtakttisch ausgebildet ist. Der Rundtakttisch weist zwei voneinander beabstandete und/oder miteinander gekoppelte Haltetische auf. Die Haltetische sind bevorzugt scheibenförmig, beispielsweise als Kreisscheibe oder Kreisringscheibe, ausgebildet. In einer anderen Ausführungsform weisen die Haltetische eine andere, im Wesentlichen scheibenförmige Form auf, beispielsweise eine in einer Draufsicht vieleckige oder polygonale Scheibenform, wie eine 3-, 4-, 5-, 6-, 7- ,8- oder mehreckige Form. Dabei sind die Haltetische für einen aufeinander abgestimmten Transport der Werkteile vorzugsweise miteinander gekoppelt. Bevorzugt sind die Haltetische derart gekoppelt, dass deren Bewegungen aufeinander abgestimmt sind. Die Kopplung erfolgt bevorzugt über eine gemeinsame Antriebsachse oder einen gemeinsamen Antrieb. Der Antrieb ist bevorzugt als Drehantrieb ausgebildet. Das Werkteil wird entsprechend über eine Aufnahme, die an dem jeweiligen Haltetisch angeordnet ist, aufgenommen. Der jeweilige Haltetisch wird um dessen Achse rotiert und so wird das Werkteil in eine weitere Position bewegt. Dort wird das Werkteil bearbeitet. Nach der Bearbeitung wird das Werkteil über eine Drehung des Haltetisches in eine nächste Position bewegt. Hier erfolgt beispielsweise eine weitere Bearbeitung oder eine Übergabe. Bevorzugt sind zwei Haltetische vorgesehen. In anderen Ausführungsformen sind mehrere Haltetische vorgesehen. Die Haltetische sind bevorzugt parallel ausgebildet.. Die Haltetische sind in einer Ausführungsform gleich ausgebildet. In einer anderen Ausführungsform sind die Haltetische ungleich ausgebildet, beispielsweise mit einem unterschiedlichen Durchmesser.

Erfindungsgemäß ist mindestens eine weitere Halteeinrichtung zum Greifen und/oder Halten der Werkteile während des Bearbeitens vorgesehen ist, wobei die weitere Halteeinrichtung eine als Vertikalrundtakttisch ausgebildete Halteeinheit umfasst, die zwei voneinander beabstandete und/oder miteinander gekoppelte und um eine Achse (A) der Halteeinheit rotierbare Haltetische aufweist. Bevorzugt ist mindestens eine zweite Halteeinrichtung vorgesehen. In anderen Ausführungsformen sind mehrere, beispielsweise drei, vier, fünf oder mehr Halteeinrichtungen vorgesehen. Die Halteeinrichtungen sind bevorzugt gleich ausgebildet. In einer Ausführungsform ist zumindest eine Halteeinrichtung unterschiedlich zu mindestens einer anderen Halteeinrichtung ausgebildet. Die Halteeinrichtung umfasst bevorzugt eine als Vertikalrundtakttische ausgebildete Halteeinheit, die mindestens zwei voneinander parallele und/oder beabstandete und/oder miteinander gekoppelte Haltetische aufweist. Der Aufbau der weiteren Halteeinrichtungen entspricht im Wesentlichen der zuvor beschriebenen Halteeinrichtung, wobei Unterschiede in Größe und/oder Form vorgesehen sein können. Auch kann eine andere Taktung vorgesehen werden. Die mindestens zwei Halteeinrichtungen sind dabei mit einem Abstand hintereinander beabstandet. Der Abstand ist bevorzugt in radiale Richtung der Haltetische unterschiedlicher Halteeinrichtungen ausgebildet. Entsprechend ist über den Abstand einen Spalt zwischen den Haltetischen unterschiedlicher Halteeinrichtungen einstellbar.

Über den Abstand ist auch das Achsmaß, das der Abstand der Achsen der Haltetische unterschiedlicher Halteeinrichtungen einstellbar. In einer anderen Ausführungsform ist der Abstand in andere Richtungen ausbildbar.

Zudem sieht eine weitere Ausführungsform vor, dass der Abstand zwischen den Halteeinrichtungen variierbar ist. Hierzu sind die Halteeinrichtungen und/oder die Haltetische entsprechend verstellbar gehalten und/oder gelagert. Für unterschiedliche Werkstücke ist so ein Abstand für eine Übergabe von einer Halteeinrichtung auf die benachbarte Halteeinrichtung optimal einstellbar. Das Einstellen erfolgt in einer Ausführungsform über einen Aktuator. In einer Ausführungsform erfolgt das Einstellen oder Verstellen elektrisch, hydraulisch, pneumatisch und/oder mechanisch. In einer weiteren Ausführungsform ist vorgesehen, dass ein Einstellen während des Betriebs bzw. des Bearbeitens, beispielsweise über eine geeignete Steuerung erfolgt. Entsprechend sind Einstellmittel vorgesehen.

In einer weiteren Ausführungsform ist vorgesehen, dass die Haltetische einer Halteeinrichtung in einem Abstand voneinander beabstandet sind. Die Haltetische sind insbesondere in axialer Richtung voneinander beabstandet. Bevorzugt sind die Haltetische auf einer Welle oder Achse angeordnet.

Zudem ist in einer Ausführungsform vorgesehen, dass der Abstand zwischen den Haltetischen variierbar ist. Entsprechend sind die Haltelager gehalten und/oder gelagert. Das Einstellen erfolgt in einer Ausführungsform über einen Aktuator. In einer Ausführungsform erfolgt das Einstellen oder Verstellen elektrisch, hydraulisch, pneumatisch und/oder mechanisch. In einer weiteren Ausführungsform ist vorgesehen, dass ein Einstellen während des Betriebs bzw. des Bearbeitens, beispielsweise über eine geeignete Steuerung erfolgt. Entsprechend sind Einstellmittel vorgesehen.

Die Einstellung des jeweiligen Abstands erfolgt in einer Ausführungsform stufenlos. In einer anderen Ausführungsform erfolgt das Einstellen diskontinuierlich, das heißt abgestuft. Entsprechend sind in einer Ausführungsform geeignete Arretiermittel vorgesehen.

Neben den Halteeinrichtungen und/oder den Haltetischen ist in weiteren Ausführungsformen vorgesehen, dass sich weitere Bauteile hinsichtlich des Abstandes zu benachbarten Bauteilen entsprechend variieren lassen. Bevorzugt weisen die Haltetische unterschiedlicher Halteeinrichtungen den gleichen axialen Abstand auf.

In einer anderen Ausführungsform ist vorgesehen, dass die Halteeinrichtungen miteinander gekoppelt sind, sodass Werkteile von einer Halteeinrichtung zu einer benachbarten Halteeinrichtung übergebbar sind. Die Halteeinrichtungen sind aufeinander abgestimmt, insbesondere hinsichtlich einer Taktung, das heißt auch hinsichtlich einer Bewegung. Dabei sind die Haltetische der jeweiligen Halteeinrichtung bevorzugt derart angeordnet, dass einander zugeordnete Haltetische etwa in einer Ebene liegen. Die Haltetische benachbarter Halteeinrichtungen sind benachbart angeordnet, sodass ein Werkteil von einem Haltetisch einer Halteeinrichtung einfach und auf möglichst kurzem Weg an den benachbarten Haltetisch der benachbarten Halteeinrichtung übergebbar ist. Bevorzugt ist hierbei ein Öffnen und Schließen der korrespondierenden Aufnahmen erforderlich, ohne dass eine weitere Bewegung der Aufnahmen, beispielsweise eine Translation, erforderlich ist. In einer Ausführungsform ist eine Rotation der Aufnahmen vorgesehen. Nach der Übergabe wird das Werkteil mittels der zweiten Halteeinrichtung weiter bewegt.

In noch einer anderen Ausführungsform ist vorgesehen, dass die Halteeinrichtungen Haltemittel zum Halten und/oder Greifen der Werkteile aufweist, wobei die Haltemittel ausgewählt sind aus der Gruppe umfassend: Greifer, Spanndorne, Spannbacken, Klemmbacken, Magnethalter und dergleichen. Die Haltemittel oder Aufnahmen sind entsprechend der zu bearbeitenden Werkstücke ausgebildet. Dabei können unterschiedliche Aufnahmen je Position an dem Haltetisch vorgesehen werden. Bevorzugt sind die Haltemittel einfach austauschbar. Hierzu sind entsprechende Verbindungsmittel an den Haltetischen und/oder den Haltemitteln vorgesehen. Bevorzugt sind die Positionen der Haltemittel unterschiedlicher Haltetische aufeinander abgestimmt.

Wiederum eine andere Ausführungsform sieht vor, dass die Haltetische einer Halteeinheit über eine gemeinsame Welle miteinander gekoppelt sind, sodass die beiden Haltetische synchron bewegbar sind. Die Haltetische einer Halteeinheit sind bevorzugt über einen gemeinsamen Antrieb gekoppelt, um die Bewegung der Haltetische aufeinander abzustimmen. Der Antrieb erfolgt dabei als Rotation um eine Achse, bevorzugt eine gemeinsame Achse. Entsprechend ist vorgesehen, dass der Antrieb bevorzugt eine gemeinsame Antriebswelle umfasst, welche die beiden Haltetische gemeinsam antreibt. Auf diese Weise ist eine synchrone Bewegung bzw. ein synchroner Antrieb der Haltetische einer gemeinsamen Halteeinheit oder eine Halteeinrichtung gesichert.

Zudem ist in einer Ausführungsform vorgesehen, dass mindestens eine Steuereinrichtung vorgesehen ist, mit welcher die Halteeinrichtungen, insbesondere deren Bewegung, steuerbar ist. Die Steuerung kann einen gemeinsamen Taktgeber umfassen. Dieser taktet die Drehung der Haltetische entsprechend geeigneter Vorgaben. In anderen Ausführungsformen sind Sensoren und Regelungen vorgesehen. Diese umfassen beispielsweise einen Bearbeitungszustand der Werkteile oder eine Position der Bearbeitungswerkzeuge und steuern entsprechend die weitere Bewegung der Werkteile in Abhängigkeit von den erfassten Daten.

Weiter sieht eine Ausführungsform vor, dass mindestens eine Bearbeitungsstation vorgesehen ist, welche so ausgebildet ist, dass eine gleichzeitige Bearbeitung von mindestens zwei gehaltenen Werkteilen einer Halteeinheit, insbesondere einer zugeordneten Halteeinheit, realisierbar ist. Die Bearbeitungsstation ist bevorzugt als parallel Bearbeitungsstation ausgebildet, um gleichzeitig mindestens zwei Wertkteile zu bearbeiten. Die Bearbeitungsstation umfasst beispielsweise eine Bohrstation, eine Schneidstation, eine Drehstation oder dergleichen.

In noch einer anderen Ausführungsform ist vorgesehen, dass die Bearbeitungsstation mindestens zwei Bearbeitungsköpfe je Halteeinrichtung, insbesondere zugeordneter Halteeinrichtung, aufweist, wobei mindestens je ein Bearbeitungskopf einem Haltetisch einer Halteeinheit zugeordnet ist. Die Bearbeitungsköpfe sind zur Bearbeitung des Werkteils ausgebildet. Insbesondere weisen die Bearbeitungsköpfe ein entsprechendes Werkzeug für eine Bearbeitung des Werkteils auf, beispielsweise einen Bohrer, einen Drehmeißel, einen Entgrater oder dergleichen.

Auch ist in einer Ausführungsform vorgesehen, dass mindestens eine weitere Bearbeitungsstation zur weiteren Bearbeitung der Werkstücke vorgesehen ist. Um eine mehrfache Bearbeitung des Werkteils zu gewährleisten, ist eine zweite Bearbeitungsstation vorgesehen. Die Bearbeitungsstation ist bevorzugt als parallel Bearbeitungsstation ausgebildet, um gleichzeitig mindestens zwei Wertkteile zu bearbeiten. Die Bearbeitungsstation umfasst beispielsweise eine Bohrstation, eine Schneidstation, eine Drehstation oder dergleichen. Die beiden Bearbeitungsstationen können gleich oder unterschiedlich ausgebildet sein. In einer Ausführungsform sind die beiden Bearbeitungsstationen gekoppelt, beispielsweise über eine Steuerung. Bevorzugt sind die Bearbeitungsstationen derart ausgebildet, dass sie ein Werkteil in unterschiedlichen Positionen bearbeiten können. Bevorzugt ist eine Bearbeitungsstation für eine Bearbeitung des Werkteils in einer ersten Position ausgebildet und die andere Bearbeitungsstation für eine Bearbeitung des Werkteils in einer zweiten oder weiteren Position ausgebildet.

Eine andere Ausführungsform sieht vor, dass die weitere Bearbeitungsstation mindestens zwei Bearbeitungsköpfe je Halteeinrichtung, insbesondere je zugeordneter Halteeinrichtung, aufweist, wobei mindestens je ein Bearbeitungskopf einem Haltetisch einer Halteeinheit zugeordnet ist. Jede der Bearbeitungsstationen ermöglicht somit ein paralleles Bearbeiten von mindestens zwei Werkteilen gleichzeitig. Durch mehrere Bearbeitungsstationen können an verschiedenen Stellen parallel immer mindestens zwei Werkteile gleichzeitig bearbeitet werden.

Eine weitere Ausführungsform sieht vor, dass die Bearbeitungsköpfe einer Bearbeitungsstation zumindest in eine Richtung verfahrbar oder bewegbar sind. Die Bearbeitungsköpfe sind in einer Ausführungsform verfahrbar und/oder drehbar. Bevorzugt ist sind die Bearbeitungsköpfe unterschiedlicher Bearbeitungsstationen in unterschiedliche Richtungen bewegbar. So ist beispielsweise ein Bearbeitungskopf in x-Richtung verfahrbar und ein Bearbeitungskopf einer anderen Bearbeitungsstation in y-Richtung.

Noch eine weitere Ausführungsform sieht vor, dass mindestens eine Zuführeinrichtung vorgesehen ist, um zu bearbeitende Werkstücke zu mindestens einer der Halteeinrichtungen zuzuführen, insbesondere einer benachbart zu der Zuführeinrichtung angeordnete Halteeinrichtung zuzuführen. Die Zuführeinrichtung kann eine beliebige Zuführeinrichtung sein. Insbesondere ist die Zuführeinrichtung als Mehrfachzuführeinrichtung, insbesondere als Parallelzuführeinrichtung, ausgebildet. Dabei entspricht die Anzahl der Zuführwege bevorzugt der Anzahl der Haltetische der vordersten Halteeinrichtung. Die Zuführung erfolgt bevorzugt translatorisch und/oder rotatorisch.

Zudem sieht noch eine weitere Ausführungsform vor, dass eine Vereinzlereinrichtung vorgesehen ist, um die zu bearbeitenden Werkstücke vor dem Halten mit der mindestens einen Halteeinrichtung zu vereinzeln, insbesondere zu teilen, sodass eine Doppelzuführung realisierbar ist. Eine Vereinzlereinrichtung ist beispielsweise als Sägeeinrichtung ausgebildet, welche die zugeführten Werkteile auf Länge schneidet. Andere Vereinzlereinrichtungen sind ebenso vorgesehen.

Auch sieht eine andere Ausführungsform vor, dass mindestens ein Vorratsbehälter vorgesehen ist. Der Vorratsbehälter ist bevorzugt zum Bevorraten und/oder Auffangen von Schmier- und/oder Kühlmitteln, Spänen oder dergleichen vorgesehen. Entsprechende Zufuhr- und Abfuhrwege sind vorgesehen. Beispielsweise umfasst der Vorratsbehälter Filtereinrichtungen, Pumpen und dergleichen, um eine geeignete Förderung vorzunehmen.

Zudem sieht eine andere Ausführungsform vor, dass mindestens eine Aufbereitungseinrichtung vorgesehen ist. Die Aufbereitungseinrichtung ist vorgesehen, um aufgefangene Schmier- und/oder Kühlmittel, die ggf. verunreinigt sind, beispielsweise durch Späne oder dergleichen, wieder so aufzubereiten, dass diese in dem Bearbeitungsvorgang wieder verwertbar sind.

Weiter sieht eine andere Ausführungsform vor, dass mindestens eine Fördereinrichtung vorgesehen ist. Die Fördereinrichtung ist beispielsweise ausgebildet, um aufbereitetes Schmier- und/oder Kühlmittel wieder dem Bearbeitungsprozess zuzuführen. Beispielsweise sind mehrere Vorratsbehälter vorgesehen. Entsprechend lässt sich das aufbereitete Mittel dann dem jeweiligen Vorratsbehälter zuführen.

Die Erfindung schließt weiter die technische Lehre ein, dass bei einem Verfahren zum gleichzeitigen Bearbeiten von Werkteilen, insbesondere ein zur spanenden Bearbeitung ausgebildetes Verfahren, bei dem parallel mindestens zwei Werkteile gleichzeitig um eine erste Achse rotiert werden, parallel bearbeitet werden, parallel weiter rotiert werden und/oder parallel übergeben werden, wobei die vorstehenden Schritte beabstandet erneut durchgeführt werden. Die Werkteile werden parallel der Bearbeitungsstation zugeführt. Bevor diese an die Halteeinrichtung übergeben werden, werden diese ggf. vereinzelt und/oder auf Länge geschnitten. Dann werden die Werkteile parallel bzw. gleichzeitig in/an der Halteeinrichtung aufgenommen und synchron zu einer Bearbeitungsposition bewegt. In dieser werden die Werkteile parallel bearbeitet. Nach dem Bearbeitungsschritt werden die Werkteile synchron bzw. parallel und/oder gleichzeitig über den Rundtakttisch in eine weitere Position bewegt. In dieser weiteren Position werden die Werkteile entsprechend weiter bearbeitet oder an einen weiteren Rundtakttisch, das heißt einer weiteren Halteeinrichtung, übergeben. Nach der Übergabe werden die Werkteile entsprechend über die weitere Halteeinrichtung transportiert, beispielsweise in weitere Bearbeitungspositionen. In denen werden die Werkteile entsprechend weiter bearbeitet oder gehandhabt. Bei der Bearbeitung erforderliches Kühl- und/oder Schmiermittel wird dabei aufgefangen, wieder aufbereitet und dem Bearbeitungsprozess erneut zugeführt. Bei dem erfindungsgemäßen Verfahren zum Bearbeiten von Werkteilen wird eine Bearbeitungsvorrichtung (100) wie vorstehend beschrieben verwendet.

Die Erfindung wird nachfolgend anhand von in den Zeichnungen dargestellten Ausführungsbeispielen näher erläutert. Für gleiche oder ähnliche Bauteile oder Merkmale werden dabei einheitliche Bezugszeichen verwendet. Merkmale oder Bauteile verschiedener Ausführungsformen können kombiniert werden, um so weitere Ausführungsformen zu erhalten. Sämtliche aus den Ansprüchen der Beschreibung oder Zeichnungen hervorgehenden Merkmale und/oder Vorteile einschließlich konstruktiver Einzelheiten, räumliche Anordnung und Verfahrensschritte, können so für sich als auch in verschiedensten Kombinationen erfindungswesentlich sein.

Es zeigen:
- Fig. 1: schematisch in einer perspektivischen Ansicht einer Bearbeitungsvorrichtung;
- Fig. 2: schematisch eine Seitenansicht der Bearbeitungsvorrichtung nach Fig. 1;
- Fig. 3: schematisch eine Draufsicht auf die Bearbeitungsvorrichtung nach Fig. 1 und 2;
- Fig. 4: schematisch einen Ausschnitt der Draufsicht nach Fig. 3 und
- Fig. 5: schematisch den Ausschnitt nach Fig. 3 in einer Perspektivansicht.

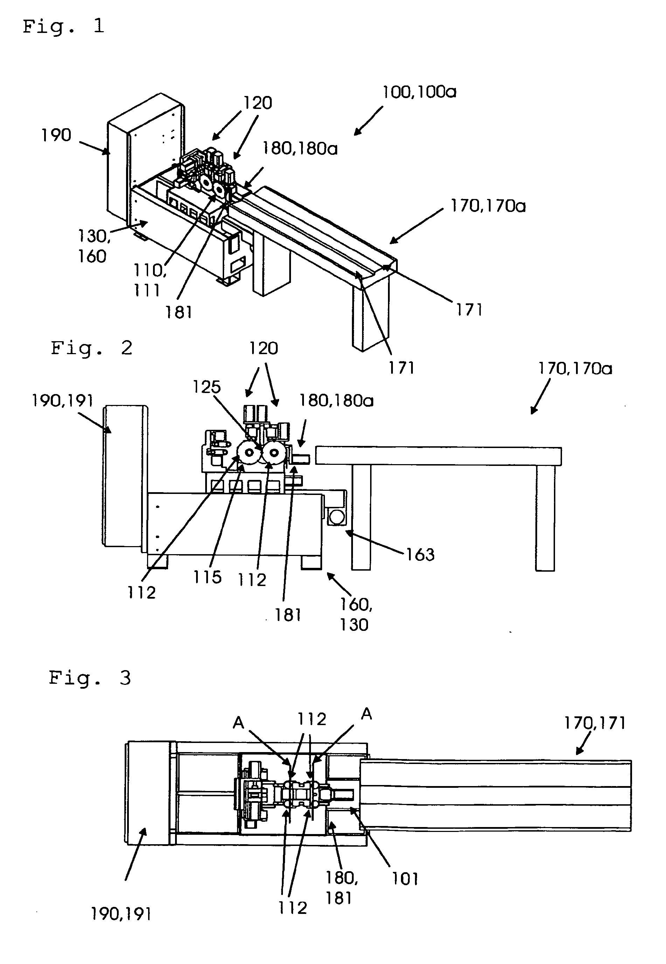

Die Fig. 1 bis 5 zeigen eine Ausführungsform einer Bearbeitungsvorrichtung 100. Die Bearbeitungsvorrichtung 100 ist als Mehrfachbearbeitungsvorrichtung, genauer als Doppel- bzw. Parallelbearbeitungsvorrichtung 100a ausgebildet. Dabei umfasst die Ausführungsform eine Zuführeinrichtung 170, genauer eine Doppel- bzw. Parallelzuführeinrichtung 170a, über welche zu bearbeitende Werkteile der Bearbeitungsvorrichtung 100 zugeführt werden. Die Werkteile werden parallel über zwei parallele Zuführwege 171 zugeführt. An die Zuführeinrichtung 170 schließt eine Vereinzlereinrichtung 180 an. Hier werden die zugeführten Werkteile vereinzelt. In der dargestellten Ausführungsform werden die Werkteile auf Länge gesägt. Entsprechend umfasst die Vereinzlereinrichtung 180 eine Sägeeinheit oder kurz Säge 181.

Für die weitere Bearbeitung werden die vereinzelten Werkteile mittels einer Halteeinrichtung 110 aufgenommen und gehalten. Die benachbart zu der Vereinzlereinrichtung 180 angeordnete Halteeinrichtung 110 umfasst eine als Vertikalrundtakttisch 111 a ausgebildete Halteeinheit 111, die hier zwei voneinander beabstandete und/oder miteinander gekoppelte Haltetische 112 aufweist. An den Haltetischen 112 sind entsprechende Aufnahmen wie Halter, Greifer oder dergleichen, zum Halten der Werkteile angeordnet. Die Aufnahmen sind hier nicht explizit dargestellt. Nachdem die Werkteile in den Aufnahmen aufgenommen sind, taktet der Vertikalrundtisch 111 a und dreht dabei die Werkteile um eine Achse A der ersten Halteeinrichtung 110. Die Achse A ist hier als Antriebswelle ausgebildet, welche die Haltetische 112 entsprechend dreht. Von einer Aufnahmeposition werden die aufgenommenen Werkteile in eine Bearbeitungsposition gedreht. Dort werden die Werkteile mittels einer der ersten Halteeinrichtung 110 zugeordneten Bearbeitungsstation 120 bearbeitet. Nach der Bearbeitung durch die erste Bearbeitungsstation 120 werden die gehaltenen und bearbeiteten Werkteile weiter getaktet, sodass diese in eine Übergabeposition gebracht werden. Von dieser Übergabeposition werden die Werkteile in eine weitere Halteeinrichtung 110 übergeben, welche hier gleich ausgebildet ist, wie die zuvor beschriebene Halteeinrichtung 110. Die weitere Halteeinrichtung 110 bringt die Werkteile durch Takten des Vertikalrundtakttisches 111a in eine weitere Bearbeitungsposition, in welcher die Werkteile von einer weiteren Bearbeitungsstation 120, die integriert mit der ersten Bearbeitungsstation 120 ausgebildet sein kann, bearbeitet werden. Die Bearbeitungsvorrichtung 100 wird über eine Steuereinrichtung 190 gesteuert. Insbesondere werden die Bearbeitungsstationen 120 und die Halteeinrichtungen 110, genauer die Bewegung der Halteeinheiten sowie das Aufnehmen über die Steuereinrichtung 190 gesteuert. Dabei wird beispielsweise auch die Zuführung von Schmier- und/oder Kühlmittel gesteuert, welches während der Bearbeitung benötigt wird. Zur Bevorratung und/oder zum Auffangen von Kühl- und/oder Schmiermittel ist ein Vorratsbehälter 130 vorgesehen, der zudem in mehrere Kammern unterteilt sein kann. Der in den Fig. dargestellte Vorratsbehälter 130 dient sowohl zum Auffangen als auch zum Abgeben von Kühl- und/oder Schmiermittel. Entsprechend weist der Vorratsbehälter 130 eine Aufbereitungseinrichtung auf, die hier nicht explizit dargestellt ist. Über diese wird das aufgefangene und evtl. durch das Bearbeiten verschmutzte Kühl-/Schmiermittel für die weitere Verwendung aufbereitete und für die weitere Bearbeitung zur Verfügung gestellt. Für den Transport des Kühl-/Schmiermittels ist eine hier ebenfalls nicht dargestellte Fördereinrichtung vorgesehen, die beispielsweise Leitungen, Pumpen und andere für die Förderung erforderlichen Elemente aufweist, beispielsweise auch Düsen, Diffusor, Filter und dergleichen.

Fig. 1 zeigt schematisch in einer perspektivischen Ansicht einer Bearbeitungsvorrichtung 100. Die Bearbeitungsvorrichtung 100 ist als Parallelbearbeitungsvorrichtung 100a ausgeführt. Über zwei Zuführwege werden Werkteile der Bearbeitungsvorrichtung 100 zugeführt. Die Werkteile werden über zwei Haltetische 112 gleichzeitig und parallel, das heißt synchron in eine Bearbeitungsposition bewegt. Die Haltetische 112 der ersten Halteeinrichtung 110 fungieren somit als Spannteller. In der Bearbeitungsposition werden Sie mittels der Bearbeitungsstation 120 parallel bearbeitet. In dem gezeigten Ausführungsbeispiel ist die Bearbeitungsstation 120 u.a. zum 4-fach Planen ausgebildet. Die Bearbeitungspositionen liegen in axiale Richtung der Achse A beabstandet zueinander. Über eine Rotation um die Achse A werden die Werkteile nach der Bearbeitung in die Übergabeposition gebracht. Dort werden Sie von der zweiten Halteeinrichtung 110 aufgenommen und analog zu dem vorstehend Beschriebenen in weitere Positionen rotiert. Die Bewegungen erfolgen synchron, sodass in axiale Richtung der Achse A stets zwei Werkteile beabstandet zueinander parallel verlaufen bzw. bearbeitet oder gehandhabt werden. Im Bearbeitungsfluss an die Bearbeitungsstationen 120 anschließend ist eine Prüfstation 115 angeordnet, welche die Bearbeitung überprüft. Die bei der Bearbeitung anfallenden Späne werden über einen Späneförderer 163 abtransportiert. Der Aufbau ist auch in Fig. 2 deutlich zu erkennen.

Die Fig. 2 zeigt schematisch eine Seitenansicht der Bearbeitungsvorrichtung 100 nach Fig. 1. Die Haltetische 112 einer Halteeinrichtung 110 liegen axial beabstandet zueinander. Die benachbart zu der Zuführeinrichtung 170 angeordnete Bearbeitungsstation 120 ist für eine erste spanende Bearbeitung (Planen etc.) ausgebildet. Die weitere Bearbeitungsstation 120 ist für ein Bohren, Senken und dergleichen ausgebildet. An einer entfernt zu der Zuführeinrichtung 170 angeordneten stelle ist die als Schaltschrank 191 ausgebildet Steuereinrichtung 190 angeordnet. Bodenseitig ist ein Grundgestell 160 vorgesehen. In das Grundgestell 160 ist der Vorratsbehälter 130 integriert. Die Werkteilübergabe findet zwischen den Haltetischen 112 verschiedenere Halteeinrichtungen 110 statt, hier durch das Bezugszeichen 125 gekennzeichnet. Die Position für die Werkteilübergabe 125 ist etwa bei der kürzesten radialen Entfernung zwischen den Haltetischen 112 unterschiedlicher Halteeinrichtungen 110 vorgesehen. Die Fördereinrichtung umfasst den Späneförderer 163, welcher benachbart zu der Zuführeinrichtung 170 angeordnet ist. Ebenfalls benachbart zu der Zuführeinrichtung 170 ist die als Säge 181 ausgebildete Vereinzlereinrichtung 180 angeordnet.

Die Fig. 3 zeigt schematisch eine Draufsicht auf die Bearbeitungsvorrichtung nach Fig. 1 und 2. Bei Bezugszeichen 101 ist die Rohmaterialzuführung dargestellt. Das zu bearbeitende Rohmaterial wird hier der Vereinzlereinrichtung 180 in Form der Säge 181 zugeführt, wo das Material auf Länge gesägt wird. Die Zuführeinrichtung 170 ist als Doppelzuführeinrichtung oder Parallelzuführeinrichtung 170a, beispielsweise in Form eines Lademagazins, einer Haspel, eines Roboters, eines Zuschießers oder dergleichen ausgebildet.

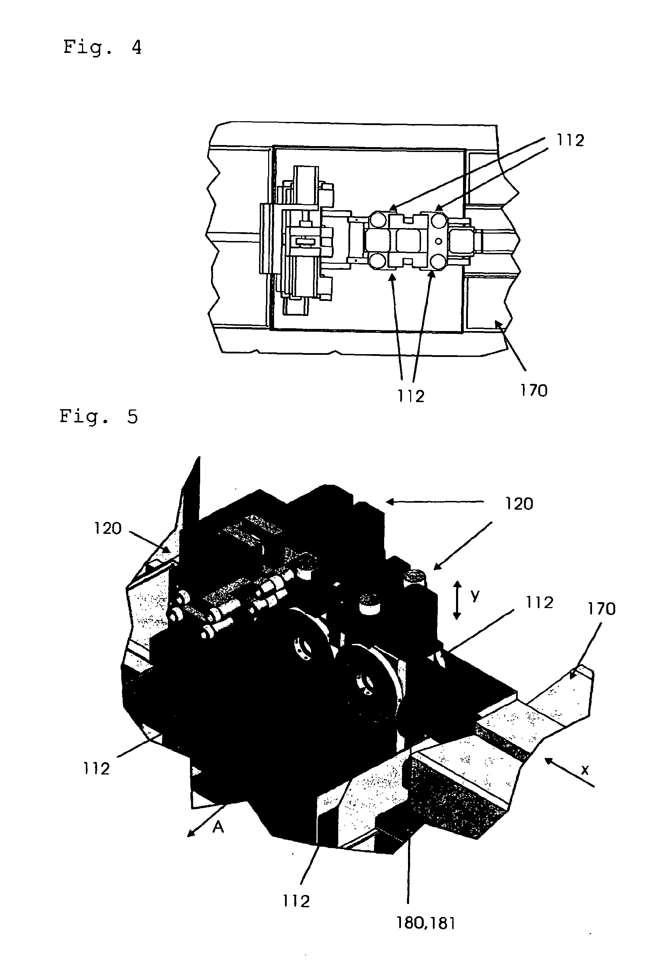

Die Fig. 4 zeigt schematisch einen Ausschnitt der Draufsicht nach Fig. 3. Hier sind deutlich die paarweise parallelen Haltetische 112 deutlich dargestellt. Die vier Haltetische 112 sind hinsichtlich ihrer Bewegung gekoppelt.

Die Fig. 5 zeigt schematisch den Ausschnitt nach Fig. 3 in einer Perspektivansicht. Die Zuführung erfolgt hier in die mit x gekennzeichnete Zuführrichtung. Die benachbart zu der Zuführeinrichtung 170 angeordnete Bearbeitungsstation 120 verfährt zur Bearbeitung in eine senkrecht zu der Zuführrichtung x ausgerichtete Vertikalrichtung y. Auch die weitere Bearbeitungsstation 120 benachbart zu der ersten Bearbeitungsstation verfährt zum Bearbeiten in die Vertikalrichtung y. Noch eine weitere Bearbeitungsstation verfährt zum Bearbeiten in die Zuführrichtung x. Die Haltetische 112 werden für den Transport der zu bearbeitenden Werkteile um die Achse A in axiale Richtung A rotiert bzw. getaktet. Dabei werden die Werkteile entlang des Umfangs der Haltetische 112 weiter in x-Richtung und y-Richtung transportiert, entsprechend der radialen Richtung R der Haltetische 112.

### Bezugszeichenliste

- 100: Bearbeitungsvorrichtung
- 100a: Doppel-/Parallelbearbeitungsvorrichtung
- 101: Rohmaterialzuführung
- 110: Halteeinrichtung
- 111: Halteeinheit
- 112: Haltetisch
- 115: Prüfstation
- 120: Bearbeitungsstation
- 125: Werkteilübergabe
- 130: Vorratsbehälter
- 160: Grundgestell
- 163: Späneförderer
- 170: Zuführeinrichtung
- 170a: Doppel-/Parallelzuführeinrichtung
- 171: Zuführweg
- 180: Vereinzlereinrichtung
- 181: Säge(-einheit)
- 190: Steuereinrichtung
- 191: Schaltschrank
- A: Achse
- X: Zuführrichtung
- Y: Vertikalrichtung

## Patentansprüche

1. Bearbeitungsvorrichtung (100) zum gleichzeitigen Bearbeiten von Werkteilen, insbesondere eine zur spanenden Bearbeitung ausgebildete Bearbeitungsstation (120), umfassend mindestens eine erste Halteeinrichtung (110) zum Greifen und/oder Halten der Werkteile während des Bearbeitens, wobei die Halteeinrichtung (110) eine als Vertikalrundtisch ausgebildete Halteeinheit (111) umfasst, die mindestens zwei voneinander beabstandete und/oder miteinander gekoppelte und um eine Achse (A) der Halteeinheit (111) rotierbare Haltetische (112) aufweist, **gekennzeichnet durch**
mindestens eine weitere Halteeinrichtung (110) zum Greifen und/oder Halten der Werkteile während des Bearbeitens, die eine als Vertikalrundtisch ausgebildete Halteeinheit (111) umfasst, die mindestens zwei voneinander beabstandete und/oder miteinander gekoppelte und um eine Achse (A) der Halteeinheit (111) rotierbare Haltetische (112) aufweist, wobei die mindestens eine erste und die mindestens eine weitere Halteeinrichtung (110) mit einem Abstand hintereinander beabstandet sind und jeweils zwei Halteinheiten (111) aufweisen, die auf der Achse (A) in axialer Richtung voneinander beabstandet angeordnet sind, und wobei die Haltetische (112) der ersten und der mindestens einen weiteren Halteeinrichtung (110) jeweils parallel ausgebildet sind.

2. Bearbeitungsvorrichtung nach Anspruch 1, **dadurch gekennzeichnet, dass** der Abstand zwischen den Halteeinrichtungen (110) variierbar ist.

3. Bearbeitungsvorrichtung nach Anspruch 1 oder 2, **dadurch gekennzeichnet, dass** die Haltetische (112) einer Halteeinrichtung (110) in einem Abstand voneinander beabstandet sind.

4. Bearbeitungsvorrichtung nach einem der vorherigen Ansprüche 1 bis 3, **dadurch gekennzeichnet, dass** der Abstand zwischen den Haltetischen (112) variierbar ist.

5. Bearbeitungsvorrichtung nach einem der vorherigen Ansprüche 1 bis 4, **dadurch gekennzeichnet, dass** die Halteeinrichtungen (110) miteinander gekoppelt sind, sodass Werkteile von einer Halteeinrichtung (110) zu einer benachbarten Halteeinrichtung (110) übergebbar sind.

6. Bearbeitungsvorrichtung nach einem der vorherigen Ansprüche 1 bis 5, **dadurch gekennzeichnet, dass** die Bearbeitungsstation (120) mindestens zwei Bearbeitungsköpfe je Halteeinrichtung (110) aufweist, wobei mindestens je ein Bearbeitungskopf einem Haltetisch (112) einer Halteeinheit (111) zugeordnet ist.

7. Bearbeitungsvorrichtung nach einem der vorherigen Ansprüche 1 bis 6, **dadurch gekennzeichnet, dass** mindestens eine weitere Bearbeitungsstation (120) zur weiteren Bearbeitung der Werkstücke vorgesehen ist.

8. Bearbeitungsvorrichtung nach einem der vorherigen Ansprüche 1 bis 7, **dadurch gekennzeichnet, dass** die weitere Bearbeitungsstation (120) mindestens zwei Bearbeitungsköpfe je Halteeinrichtung (110) aufweist, wobei mindestens je ein Bearbeitungskopf einem Haltetisch (112) einer Halteeinheit (111) zugeordnet ist.

9. Bearbeitungsvorrichtung nach einem der vorherigen Ansprüche 1 bis 8, **dadurch gekennzeichnet, dass** die Bearbeitungsköpfe einer Bearbeitungsstation (120) zumindest in eine Richtung verfahrbar sind.

10. Bearbeitungsvorrichtung nach einem der vorherigen Ansprüche 1 bis 9, **dadurch gekennzeichnet, dass** eine Vereinzlereinrichtung (180) vorgesehen ist, um die zu bearbeitenden Werkstücke vor dem Halten mit der mindestens einen Halteeinrichtung (110) zu vereinzeln, insbesondere zu teilen, sodass eine Doppelzuführung realisierbar ist.

11. Bearbeitungsvorrichtung nach einem der vorherigen Ansprüche 1 bis 10, **dadurch gekennzeichnet, dass** mindestens eine Aufbereitungseinrichtung vorgesehen ist.

12. Verfahren zum gleichzeitigen Bearbeiten von Werkteilen, insbesondere ein zur spanenden Bearbeitung ausgebildetes Verfahren, bei dem parallel mindestens zwei Werkteile gleichzeitig um eine erste Achse (A) rotiert werden, parallel bearbeitet werden, parallel weiter rotiert werden und/oder parallel übergeben werden, wobei die vorstehenden Schritte beabstandet erneut durchgeführt werden, **dadurch gekennzeichnet, dass** zum Bearbeiten eine Bearbeitungsvorrichtung (100) gemäß einem der vorstehenden Ansprüche 1 bis 11 verwendet wird.

## Claims

1. Processing apparatus (100) for the simultaneous processing of workpieces, particularly a processing station (120) arranged for machining, including at least one first support device (110) for gripping and/or holding the workpieces during the processing, wherein the support device (110) comprises a support unit (111) arranged in the form of a vertical rotary table, which includes at least two rotable support tables (112), which are spaced from one another and/or are coupled together and are rotatable about an axis (A) of the support unit (111), **characterised by** at least one further support device (110) for gripping and/or holding the workpieces during the processing, which comprises a support unit (111) arranged in the form of a vertical rotary table, which includes at least two rotable support tables (112), which are spaced from one another and/or coupled together and are rotatable about an axis (A) of the support unit (111), wherein the at least one first and the at least one further support device (110) are arranged behind one another at a spacing and each include two support units (111), which are arranged on the axis (A) spaced from one another in the axial direction and wherein the support tables (112) of the first and the at least one further support device (110) are arranged parallel to one another.

2. Processing apparatus as claimed in claim 1, **characterised in that** the spacing between the support devices (110) is variable.

3. Processing apparatus as claimed in claim 1 or 2, **characterised in that** the support tables (112) of one support device (110) are spaced from one another by a distance.

4. Processing apparatus as claimed in one of the preceding claims 1 to 3, **characterised in that** the distance between the support tables (112) is variable.

5. Processing apparatus as claimed in one of the preceding claims 1 to 4, **characterised in that** the support devices (110) are coupled together so that workpieces are transferable from one support device (110) to an adjacent support device (110).

6. Processing apparatus as claimed in one of the preceding claims 1 to 5, **characterised in that** the processing station (120) includes at least two processing heads per support device (110), wherein at least one of the processing heads is associated with a support table (112) of a support unit (111).

7. Processing apparatus as claimed in one of the preceding claims 1 to 6, **characterised in that** at least one further processing station (120) is provided for further processing the workpieces.

8. Processing apparatus as claimed in one of the preceding claims 1 to 7, **characterised in that** the further processing station (120) includes at least two processing heads per support device (110), wherein at least one of the processing heads is associated with a support table (112) of a support unit (111).

9. Processing apparatus as claimed in one of the preceding claims 1 to 8, **characterised in that** the processing heads of one processing station (120) are movable in at least one direction.

10. Processing apparatus as claimed in one of the preceding claims 1 to 9, **characterised in that** a separator device (180) is provided in order to separate, particularly to divide, the workpieces to be processed before supporting them with the at least one support device (110), so that a double feed may be achieved.

11. Processing apparatus as claimed in one of the preceding claims 1 to 10, **characterised in that** at least one treatment device is provided.

12. A method of simultaneously processing workpieces, particularly a method intended for machining, in which at least two workpieces are rotated in parallel simultaneously about a first axis (A), are processed in parallel, are further rotated in parallel and/or are transferred in parallel, wherein the steps referred to above are performed again at a spacing, **characterised in that** a processing device (100) in accordance with one of the preceding claims 1 to 11 is used for the processing.

## Revendications

1. Dispositif d'usinage (100) pour l'usinage simultané de parties de pièce, en particulier un poste d'usinage (120) conçu pour l'usinage par enlèvement de matière, comprenant au moins un premier équipement de maintien (110) pour saisir et/ou maintenir les parties de pièce pendant l'usinage, sachant que l'équipement de maintien (110) comprend une unité de maintien (111) réalisée sous forme de plateau circulaire vertical, laquelle présente au moins deux plateaux de maintien (112) mutuellement distants et/ou accouplés entre eux et rotatifs autour d'un axe (A) de l'unité de maintien (111), **caractérisé par**
au moins un équipement de maintien supplémentaire (110) pour saisir et/ou maintenir les parties de pièce pendant l'usinage, qui comprend une unité de maintien (111) réalisée sous forme de plateau circulaire vertical, laquelle présente au moins deux plateaux de maintien (112) mutuellement distants et/ou accouplés entre eux et rotatifs autour d'un axe (A) de l'unité de maintien (111), sachant que le premier équipement de maintien (110) au moins unique et l'équipement de maintien supplémentaire (110) au moins unique sont distants l'un à la suite de l'autre à intervalle et présentent chacun deux unités de maintien (111) qui sont disposées à distance mutuelle en direction axiale sur l'axe (A), et sachant que les plateaux de maintien (112) du premier équipement de maintien (110) et de l'équipement de maintien supplémentaire (110) au moins unique sont respectivement conçus parallèles.

2. Dispositif d'usinage selon la revendication 1, **caractérisé en ce qu'**on peut faire varier la distance entre les équipements de maintien (110).

3. Dispositif d'usinage selon la revendication 1 ou 2, **caractérisé en ce que** les plateaux de maintien (112) d'un équipement de maintien (110) sont mutuellement distants à intervalle.

4. Dispositif d'usinage selon l'une des revendications précédentes 1 à 3, **caractérisé en ce qu'**on peut faire varier la distance entre les plateaux de maintien (112).

5. Dispositif d'usinage selon l'une des revendications précédentes 1 à 4, **caractérisé en ce que** les équipements de maintien (110) sont accouplés entre eux, de sorte que des parties de pièce peuvent être transférées d'un équipement de maintien (110) vers un équipement de maintien voisin (110).

6. Dispositif d'usinage selon l'une des revendications précédentes 1 à 5, **caractérisé en ce que** le poste d'usinage (120) présente au moins deux têtes d'usinage par équipement de maintien (110), sachant qu'au moins une tête d'usinage respective est associée à un plateau de maintien (112) d'une unité de maintien (111).

7. Dispositif d'usinage selon l'une des revendications précédentes 1 à 6, **caractérisé en ce qu'**au moins un poste d'usinage supplémentaire (120) est prévu pour poursuivre l'usinage des pièces.

8. Dispositif d'usinage selon l'une des revendications précédentes 1 à 7, **caractérisé en ce que** le poste d'usinage supplémentaire (120) présente au moins deux têtes d'usinage par équipement de maintien (110), sachant qu'au moins une tête d'usinage respective est associée à un plateau de maintien (112) d'une unité de maintien (111).

9. Dispositif d'usinage selon l'une des revendications précédentes 1 à 8, **caractérisé en ce que** les têtes d'usinage d'un poste d'usinage (120) peuvent être déplacées au moins dans une direction.

10. Dispositif d'usinage selon l'une des revendications précédentes 1 à 9, **caractérisé en ce qu'**il est prévu un équipement de séparation (180) pour séparer les pièces à usiner avant le maintien avec l'équipement de maintien (110) au moins unique, en particulier pour les séparer en deux parties, de sorte qu'on peut réaliser une double alimentation.

11. Dispositif d'usinage selon l'une des revendications précédentes 1 à 10, **caractérisé en ce qu'**il est prévu au moins un équipement d'épuration.

12. Procédé pour l'usinage simultané de parties de pièce, en particulier un procédé conçu pour l'usinage par enlèvement de matière, selon lequel on fait tourner en parallèle au moins deux parties de pièce simultanément autour d'un premier axe (A), on les usine en parallèle, on les fait à nouveau tourner en parallèle et/ou on les transfère en parallèle, sachant que les étapes précédentes sont effectuées à nouveau à intervalle, **caractérisé en ce qu'**on utilise pour l'usinage un dispositif d'usinage (100) selon l'une des revendications précédentes 1 à 11.
